Europäisches Patentamt

European Patent Office

Office européen des brevets

(11) Publication number: 0 537 509 A2

# EUROPEAN PATENT APPLICATION

(21) Application number: 92116148.5

(51) Int. Cl.5: G06F 9/46

(22) Date of filing: 22.09.92

(30) Priority: 17.10.91 US 777970

(43) Date of publication of application:
21.04.93 Bulletin 93/16

(84) Designated Contracting States:
DE FR GB

(71) Applicant: International Business Machines
Corporation
Old Orchard Road
Armonk, N.Y. 10504(US)

(72) Inventor: Serpanos, Dimitrios Nikolaou
38-1/2 Wolden Road, Apt. B-12
Ossining, N.Y. 10562(US)
Inventor: Tantawi, Asser Nasreldin
31 Maple Hill Drive
Mahopac, N.Y. 10541(US)
Inventor: Tantawy, Ahmed Nasr-El-Din
397 Chestnut Court
Yorktown Heights, N.Y. 10598(US)

(74) Representative: Herzog, Friedrich Joachim,
Dipl.-Ing.
IBM Deutschland Informationssysteme
GmbH Patentwesen und Urheberrecht
Pascalstrasse 100
W-7000 Stuttgart 80 (DE)

(54) An adaptive scheduling scheme for dynamic service time allocation on a shared resource.

(57) A method and apparatus for allocating access time to a common resource of a computer for a number of requestors requesting access to the resource. This invention comprises detecting waiting time for each of the requestors requesting access to the resource and then allocating maximum access time for each requestor, where the access time is a function of the waiting time. After a requestor has completed an access to the resource, the maximum access time is then reduced to a constant.

FIG. 2

This invention relates to providing access to a resource of a computer system to a number of requestors. More specifically, with this invention a maximum access time is provided to each requestor with the access time being a function of the waiting time and being returned to an initial value after each requestor accesses the resource.

The scientific and technical community has been very active in the development of innovative algorithms to schedule the allocation and use of a shared resource among various requesting users with no prior information about service requirements [ 1-5 ]. Such algorithms were developed for a large number of applications such as processor scheduling (in single or multiple processor systems), allocation of connections in switches, and process scheduling in manufacturing (production lines).

The taxonomy of scheduling algorithms is somewhat hard to define. For the purpose of this invention, we will emphasize one criterion to distinguish two large classes of algorithms. This is the duration for which a requestor may use the common resource after it has been allocated to it. Many algorithms allow a requestor to use the resource until completion (such as FCFS). Some other algorithms define a fixed quota. A requestor may use the allocated resource until the expiration of the time quota. If the requestor could not complete during that granted time, i.e., it still needs the resource for more time, it is reentered to the queue and will have to wait for its next turn before it is given a new service time quota. This turn usually comes after the other competing requestors waiting in the queue are served, usually on a round robin basis to ensure some kind of fairness. The allocation policy may, however, be based on criteria other than the order of entering a queue. An example may be the time needed to complete the job, i.e., the resource is given to the requestor whose job needs the longest (or shortest) time to complete among its competitors. But in all of these cases, the requestor is given a FIXED MAXIMUM TIME during which he can use the resource before releasing it.

The service time quota may be different for different classes of requestors, but it is the same for all the requestors in any given class. This classification is used to reflect the relative priority or importance of requestors. It is also known that some scheduling disciplines allow requestors to be transferred from one class to another class with different priority, usually with different quota, as they remain in the system. In such schemes, the processor usually serves all the requestors of the higher priority class first on a round robin basis then moves to serve the next lower priority class and so on. This idea is used in many real time systems, where the requestor priority reflects its urgency or its closeness to the required completion deadline. In some other schemes, low level requestors are served first and their level is raised after each service. This gives fast initial response (attention) to incoming requestors and also favors those with short service requirements. One such scheme is embodied in the foreground-background algorithm [ 2 ].

There exists a variety of scheduling disciplines where the priority level of a request changes as a function of time as it resides in the system. We summarize three classes of such scheduling disciplines [ 2 ]: Time-Dependent Priority, Bribing for Queue Position, and Selfish Scheduling.

## 1. Time-Dependent Priority

Time-dependent priority scheduling discipline is simply a nonpreemptive priority scheduling scheme where the priority level of a request increases as it waits in the queue. The amount of increase in the priority level is either a linear function of time or a higher order function. Different classes of requests may have different priority functions. Whenever the resource becomes available, the request with the largest priority level gains access to the resource and uses it until service completion, i.e., no service quantum and feedback of requests.

## 2. Bribing for Queue Position

In this system, each request has an impatience factor, $\alpha$, and a corresponding offered bribe, $\gamma_\alpha$. A cost function, $C(\alpha)$ is calculated based on $\gamma_\alpha$ and $W(\gamma_\alpha)$, the average waiting time (in queue) for a requestor whose bribe is $\gamma_\alpha$, as $C(\alpha) = \gamma_\alpha + \alpha W(\gamma_\alpha)$. The goal is to minimize the expected cost, subject to an average bribe constraint, thus yielding an optimal set of bribes, $\gamma_\alpha$. There is no dynamic behavior in such systems and requests, whenever they gain access to the resource, use it until service completion.

## 3. Selfish Scheduling

The system consists of two boxes: a queue box and a service box. Upon arrival, requests wait in the queue box and their priority levels increase linearly with time at a given rate, $\alpha$. The service box contains a waiting room (a set of queues) and the resource to be allocated. Similarly, the priority levels of requests in the service box increase linearly with time, but at a given rate $\beta$ that is smaller than $\alpha$. Requests are transferred from the queue box to the service box whenever their priority level matches the priority level of requests in the service box. This is always possible since $\beta$ is smaller then $\alpha$. The scheduling discipline within the service box is arbitrary (including feedback queues) and thus selfish scheduling defines a large class of scheduling disciplines. Note, however, that the priority level of a request in the service box increases linearly with time, independent of whether the request is waiting in a queue or receiving service. Furthermore, due to the structure of the selfish scheduling system, the priority level does not change if a request is interrupted, possibly due to the expiration of a service quantum. In other words, at a given point in time, all requests in the service box have the same priority level which increases linearly with time, uniformly among all requests.

REFERENCES

1. Dietel, H., "An Introduction to Operating Systems," Addison-Wesley, 1983.
2. Kleinrock, L., "Queueing Systems, Vol. II: Computer Applications," J. Wiley, 1976.
3. Leffler, S., McKusick, M., Karels, J., and Quarterman, J., "The Design and Implementation of the 4.3BSD UNIX Operating System," Addison-Wesley, 1989.
4. Lavenberg, S. (ed.), "Computer Performance Modeling Handbook," Academic Press, 1983.
5. Ruschitzka, M., "Policy Function Scheduling," Performance Evaluation, 1981, pp. 31-47.

U. S. Patent 4,096,571 to Vander Mey discloses an arbitration scheme that uses waiting time to determine which request should be honored. This scheme is basically a FIFO scheme with static priorities used to break ties. This patent does not address the service time allocation issue.

U. S. Patent 4,488,218 to Grimes discloses circuitry which allows stations to dynamically change their priority according to various parameters, one such parameter being whether the buffer is full or half full. In the detailed example given in patent, the resource is kept until completion of the required service. Otherwise, nothing is mentioned about the time a station is allowed to keep the resource after it is allocated.

U. S. Patent 4,633,394 to Georgiou et al discloses a circuit to implement fixed priority. Requestors are grouped into two fairness groups, and round robin is applied among the groups with all requestors from one group being served before the requestors in the other group. A requestor is moved to the other group as soon as it is completely served.

U. S. Patent 4,672,536 to Giroir et al discloses an arbitration scheme where access to a common resource is granted to the requestor with the oldest request among those having the highest priority. Use of the resource is not interrupted.

U. S. Patent 4,719,569 to Ludemann et al discloses an arbitration scheme that enables a device to keep using a resource that is granted to it as long as the device continues issuing new requests exceeding a given rate. This scheme uses emergency and need, not waiting time, to determine the length of allowed service time.

SUMMARY OF THE INVENTION

It is, therefore, an object of this invention to provide an improved adaptive scheduling scheme for dynamic service time allocation on a shared resource.

It is more specifically an object of this invention to provide an adaptive scheduling scheme balancing the fairness property of processor sharing (PS) and the efficiency of first come first serve (FCFS).

It is also an object of this invention to provide a switching system that employs the adaptive scheduling scheme to provide access to multiple resources (connections), thus yielding higher throughput, increased fairness, and less waiting time.

These and other objects are advantageously solved basically by the features laid down in the independent claims.

Accordingly, this invention provides a method and apparatus for providing access to a common resource of a computer system to a number of requestors requesting access to the resource. With this invention, a waiting time for each of the requestors is detected. This waiting time is the time the requestor waits for access to the resource after having requested such access. A maximum access time, which is a function of the waiting time, is given to each requestor at the time of access. When the requestor completes its access, the maximum access time is then reduced to an initial value, which is the same for all requestors.

The variable dynamic time allocation scheme of this invention allows a system to reach high efficiencies when the system is heavily loaded, as manifested by longer waiting times, while insuring fairness when the system is reasonably loaded, as manifested by shorter waiting times.

This invention also allows for the preservation of initial requestor classification, thereby maintaining a true indicator that reflects the real priority of a requestor. For example, this priority may be used to preempt or discard lower class requestors in the case of congestion.

The adaptive scheduling scheme of this invention introduces a concept whereby the priority level of a request waiting in the queue increases as a function of its waiting time since its last admission to the queue. An admission to the queue may be either after a new arrival of a requestor, or after a feedback request following the expiration of the service credits of the requestor using the resource. The service credit allocated to a request is a function of the request's priority level, in contrast to service-till-completion or a quantum which is independent of the attained time-dependent priority level.

In the following the invention will be described in more detail in connection with embodiments depicted in the drawing, in which:

FIG. 1 is a schematic illustration of the overall system implementing this invention;

FIG. 2 is an illustration of the scheduler of FIG. 1 in greater detail;

FIG. 3 is a flow diagram of the generalized algorithm used to implement this invention;

FIG 4 is an example timing diagram used to illustrate the preferred embodiment of this invention; and

FIG. 5 schematically illustrates the apparatus of this invention for switching data between input and output ports.

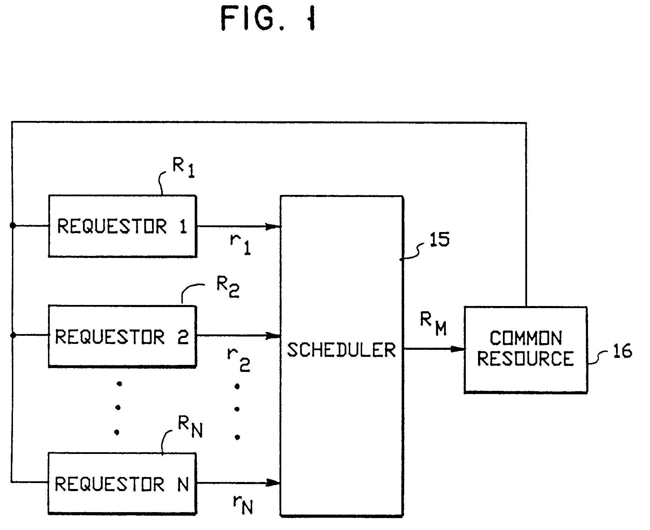

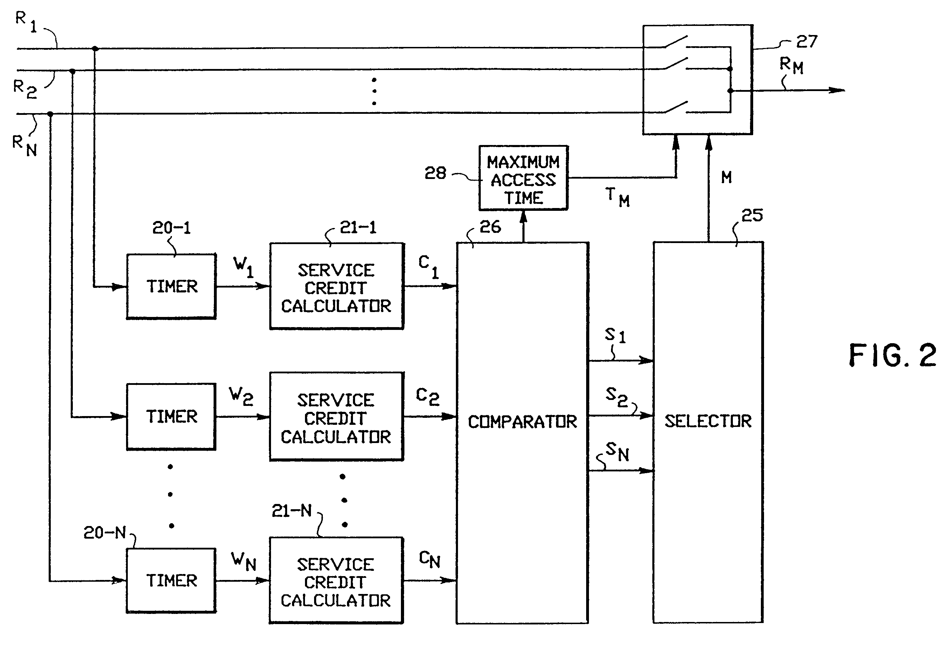

FIG. 1 is a schematic illustration of the overall system implementing the invention. Shown are requestors $R_1$, $R_2$,..., $R_N$, which can request access to resource 16. The selection as to which requestor, and for how long, gains access to the common resource is accomplished by the scheduler 15, which is described in more detail in FIG. 2. When a requestor places a request for access to the common resource, one of the lines $r_1$ through $r_N$ will be activated thereby causing one of the timers 20-1 through 20-N to be reset to zero. The reset timer will continue to run until access is given to the requestor. This waiting time will appear on one of the output ($W_1$ through $W_N$) of timers 20-1 through 20-N. Service credits for each of the requestors are determined by one of the service credit calculators 21-1 through 21-N based on the waiting time recorded by the corresponding timer. These service credits ($C_1$ through $C_N$), are defined as the product of a credit rate C and a waiting time $W_1$. When the scheduler determines which requestor is to gain access to the resource, the service credit values $C_1$ through $C_N$ are compared by comparator 26, and the requestor having the largest service credit value is scheduled to gain access to the resource. The result of comparing the service credit values appears on output lines S1 through SK. The value(s) selected is (are) equal to the largest service credit value. Selector 25 then uses the outputs of the comparator to actually select which requestor is to gain access to the common resource. The selected requestor $R_M$ is allowed to use the resource for a maximum access $T_M$, which is the sum of the value of the basic quota $q_b$ and the service credit $C_M$. The selected requestor $R_M$ will then use the resource for a maximum time $T_M$ or until the requestor finishes its required service from the resource, whichever occurs first. When the request is completed it leaves the system. If the request is not completed within $T_M$ another request is made thereby resetting the timer.

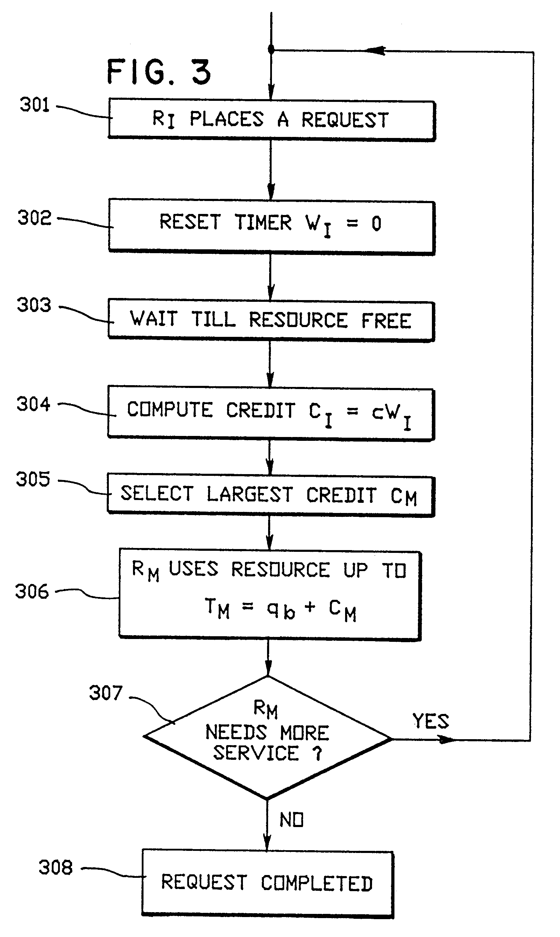

Shown in FIG.3 is a flow diagram of the generalized algorithm implementing this invention. Requestor $R_I$ places a request to use the resource. See 301. The waiting time, $W_I$, is reset to zero to keep track of the time the request started its waiting period (302). Requestors wait until the resource becomes available (303). The service credits, $C_I$, are computed for all the waiting requestors. The term "service credits" is defined as the product of the credit rate, C, and the waiting time elapsed (i.e., the timer value, $W_I$) since the last time the requestor places a request (304). Among all the requestors waiting, the requestor with the largest credit value, say $R_M$, is selected to gain access and use the resource (305). The selected requestor $R_M$ is allowed to use the resource for up to a maximum access time, $T_M$, which is the sum of the value of the basic quota, $q_b$, and the service credits, $C_M$ (306). The selected requestor $R_M$ uses the resource for a time $T_M$ or until the request finishes its required service from the resource, whichever occurs first (307). If the request is completed, it releases the resource (308); otherwise, it places another request (301) and resets its waiting time timer (302).

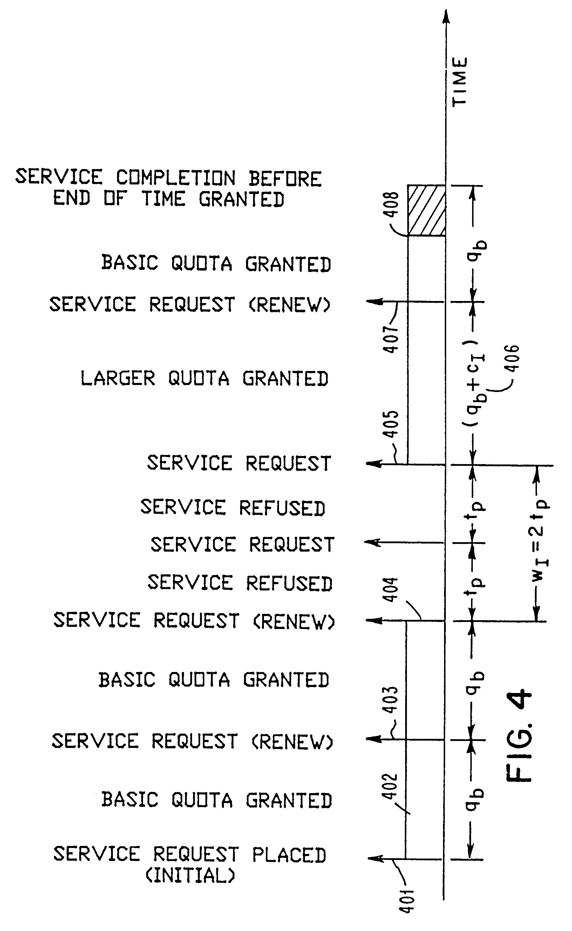

The generalized algorithm can be described as shown in FIG.4.

1. A requestor $R_i$ places an initial service request (401) as soon as it needs to use the shared resource. Actually, all service requests are made slightly before the service is granted because of delay in gaining access to the resource. This delay is not shown in FIG. 4 for the sake of simplicity. It may be able to be served if the resource is available, otherwise it waits for a given time $t_p$ before it requests service again. We call $t_p$ the persistence time interval: it will be shorter for persistent requestors and longer for less persistent ones. This mechanism can be used to implement priority classes, for example.

2. A requestor that is served without waiting is allowed to use the resource for a time period that should not exceed a basic quota $q_b$ (402). This means that the requestor may use the resource for a period equal to either $q_b$ or the actual needed service time, whichever is smaller. If the requestor still needs more time to be completed, it renews the service request (403) as if it has newly arrived to the system (but, of course, with a service requirement that is reduced by the amount of time for which it has actually used the server). Hence, it competes again with all the other requestors that are waiting for service in the system.

3. A requestor that is denied (404) the use of the server after it has requested it will be given a credit rate $\overline{C}$. This grant may be repeated as many times as the request is denied. Therefore, as the requestor waits to be served for a period $W_l$ (waiting time), it accumulates a total service credit $C_l = C \times W_l$. For example, if $W_l = 2 t_p$ then $C_l = C \times 2t_p$. When this requestor is granted (405) the use of the resource, it is allowed to use the resource for a total time not exceeding $T_l = q_b + C_l$ (406) (or the time needed for completion, whichever is smaller). In 407 of FIG. 4, a renewed request is made since the service time granted was not enough time for job completion. Since the renewed request was granted almost immediately, only the basic quota $q_b$ of service time was provided. However, since service completion did not require the entire service time granted (408), the requestor releases the resource prior to the end of the provided service time. Note that credit rates may be different for different classes of requestors in a multipriority system. It is also important to note that, in this description, we have used a linear relationship between $C_l$ and $W_l$ to illustrate our scheme in a simple manner whereas, in principle, there is no restriction in defining a more general relationship $C_l = f(W_l)$.

4. The resource allocation policy in a single priority system is simple: it is given to the requestor $R_M$ that has the largest waiting time, $W_M$ among those who have requested the use of the server. In a multipriority system, the server can be allocated in two ways:

    a. it is given to the requestor having the highest total credit, $C_M$, or

    b. it is given to the requestor having the largest waiting time $W_M$ among the requestors of the highest available (preemptive) priority class.

5. For practical reasons, the total service credits accumulated by any requestor is to be limited to a reasonable maximum. This, however, is not necessary for the operation of the algorithm. In this regard, an unbounded credit (i.e., a maximum approaching infinity) leads to a behavior of the system that approaches FCFS, in case of extremely heavy load.

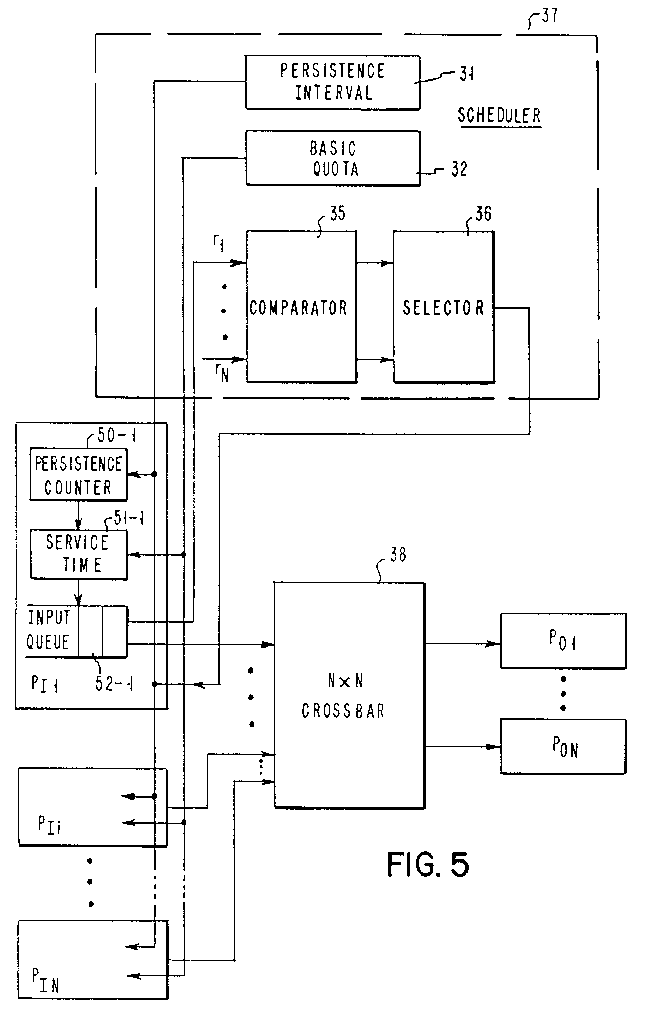

In a switching system, the scheme can be used for the allocation of input/output connections. As an example, we outline the implementation of our scheme in a crossbar switch with input queueing (See FIG.5). Shown in FIG.5, is a crossbar switch 38 with N input ports $P_{l1},...,P_{lN}$ N output ports $P_{O1},..., P_{ON}$, and the scheduler 37.

Within the scheduler 37, there are two registers with global variables: register 31 contains the per-sistence interval $t_p$ and register 32 contains the basic quota $q_b$. The Persistence Interval represents the time between two consecutive requests of the same requestor, i.e., assuming that input port $P_{li}$ has placed a request for a connection and it is not granted the connection, it will request again after a time interval equal the value Persistence Interval $t_p$. In this fashion, the Persistence Interval time practically represents the rate at which credit is gained. When the system is initialized, the Persistence Interval register 31 and the Basic Quota register 32 are loaded with the values.

Each input port $P_{li}$ has two registers associated with it: the Persistence Counter 50-l, which corresponds to the Timer 20-l in FIG.2, and the Service Time register 51-l, which corresponds to the service credit calculator 21-l in FIG. 2. The scheduler initializes the Persistence Counter 50-l to the value in register 31 and the Service Timer 51-l to the value of register 32.

As soon as a packet arrives at the head of the input queue 52-l of an input port (e.g., port $P_{li}$), it places a request to the scheduler 37. If an immediate connection is refused, then its Service Time counter 51-l is incremented by an amount equivalent to the credit rate C associated with the requestor's priority class, and the Persistence counter 50-l starts decrementing. A new request by the port $P_{li}$ is not considered until the Persistence counter expires (i.e., it becomes zero). If port $Pl_l$ is refused connection again, the above procedure is repeated, but if it is granted the connection, it will use the connection for the time interval indicated by either the Service Time counter 51-l or the connection time needed, whichever is less. After the port finishes using the connection, Service Time counter 51-l will be initialized again to the value of Basic Quota 32 ($q_b$). The Persistence counter 50-l is also initialized to the value of the Persistence Interval register 31 every time the counter is reset.

When a number of requests is considered by the scheduler, the comparator 35 (which corresponds to comparator 26 in FIG.2) identifies for every output port all the input ports which request connection to it and have the same highest value in their Service Time registers. If, according to this procedure, only one input port is selected for a connection to an output port, then this input port will be granted that connection as explained above. Otherwise, if more than one input port is selected by the comparator 35, then the Selector 36 (corresponding to the selector 25 in Figure 2) will select only one among them, according to any arbitrary (but previously chosen) algorithm, such as round-robin or fixed priority. The implementation of the comparator 35 and the selector 36 circuits is simple and straight forward. The details of their implementation does not have a significant effect on the operation of the method described here but we believe that a round robin scheme for the selector will provide better fairness properties.

## Claims

1. In a computer system, a method of providing access to a common resource for a plurality of requestors $R_1$, $R_2$, ..., $R_N$ requesting access to said resource, said method comprising:
   detecting a waiting time ($W_I$) for each of said requestors ($R_I$), where $W_I$ is the time $R_I$ waits for access to said common resource after having requested access, where $1 \leq I \leq N$; and
   providing a maximum access time $T_I$ for each requestor $R_I$, where $T_I$ is a function of $W_I$, where $T_I$ returns to an initial value $q_b$ after each access of $R_I$ to said resource, and where $q_b$ is a constant.

2. In a computer system, a method of dynamically providing access time to a common resource for a plurality of requestors ($R_1$, $R_2$, ..., $R_N$) requesting access to said resource, said method comprising:
   detecting a waiting time $W_I$ for each of said requestors $R_I$, where $W_I$ is the time $R_I$ waits to access said resource after having requested access, where $1 \leq I \leq N$;
   determining service credits $C_I$ for each of said requestors, said credits being a function of said waiting time $W_I$ and said credits $C_I$ being granted to each requestor $R_I$ only if $R_I$ is refused access to said resource after having requested access to said resource; and
   providing a maximum access time $T_I$ for each requestor $R_I$ to use said resource, where $T_I = q_b + C_I$ where $q_b$ is a constant, and where $T_I$ returns to $q_b$ after each access of $R_I$ to said resource;
   wherein preferably each $C_I$ and $q_b$ is also a function of a priority class associated with requestor $R_I$ of said requestors, and wherein preferably said priority class remains constant throughout said waiting time $T_I$; and/or
   wherein preferably access to said resource is granted to a requestor $R_M$ having the most service credits $C_M$ of said requestors, where $1 \leq I \leq M$.

3. In a computer system, a method of providing access time to a common resource for each of a plurality of requestors $R_1$, $R_2$, ..., $R_N$ requesting access to said resource, said method comprising:
   detecting a waiting time $W_I$ for each of said requestors ($R_I$), where $W_I$ is the time $R_I$ waits for access to said common resource after having requested access, where $1 \leq I \leq N$;
determining service credits $C_I$ for each of said requestors, said credits $C_I$ being a function of said waiting time $W_I$, said credits $C_I$ being granted to each requestor $R_I$ only if $R_i$ is refused access to said resource after having requested access to said resource; and
providing a maximum time $T_M$ to a requestor $R_M$, where $1 \leq M \leq N$, with $T_M = q_b + CM$, where $q_b$ is a constant, and where $T_M$ returns to $q_b$ after each access of $R_M$ to said resource, with $R_M$ having no service credits immediately after each access.

4. In a switching system, a method of switching data between input ports $P_{I1}$, $P_{I2}$, ..., $P_{IN}$ and output ports $P_{O1}$, $P_{O2}$, ..., $P_{ON}$ of said method comprising:
   detecting a waiting time $W_I$ for each input port $P_{I1}$, with $W_I$ being the time $P_{I1}$ waits for a connection to one of said output ports after having made a request for said connection; and
   providing a connection to one of said output ports for a maximum connection time of $T_1$ for each input port $P_{I1}$ requesting a connection to said one output port, with $T_1$ being a function of $W_1$ and with $T_1$ returning to a constant value $q_b$ after said connection is disconnected.

5. In a computer system, an apparatus for providing access to a common resource for a plurality of requestors $R_1$, $R_2$, ..., $R_N$ requesting access to said resource, said apparatus comprising:
   means for detecting a waiting time ($W_I$) for each of said requestors ($R_1$), where $W_I$ is the time $R_I$ waits for access to said common resource after having requested access, where $1 \leq I \leq N$; and
   means for providing a maximum access time $T_I$ for each requestor $R_I$, where $T_I$ if a function of $W_I$ where $T_I$ returns to an initial value $q_b$ after each access of $R_I$ to said resource, where $q_b$ is a constant.

6. In a computer system, an apparatus for dynamically providing access time to a common resource for a plurality of requestors ($R_1$, $R_2$, ... $R_N$) requesting access to said resource, said apparatus comprising:
   means for detecting a waiting time $W_I$ for each of said requestors $R_I$, where $W_I$ is the time $R_I$ waits to access said resource after having requested access, and where $1 \leq I \leq N$;
   means for determining service credits $C_I$ for each of said requestors, said credits being a function of said waiting time $W_I$ and said credits $C_I$ being granted to each requestor $R_I$ only if $R_I$ is refused access to said resource after having requested access to said resource; and means for providing a maximum access time $T_I$ for each requestor $R_I$ to use said resource, where $T_I = q_b + C_I$ where $q_b$ is a constant, and where $T_I$ returns to $q_b$ after each access of $R_I$ to said resource;

wherein preferably each $C_I$ is also a function of a priority class associated with requestor $R_I$ of said requestors, and wherein preferably said priority class remains constant throughout said waiting time $T_I$.

7. In a computer system, an apparatus for providing access time to a common resource for each of a plurality of requestors $R_1$, $R_2$, ..., $R_N$ requesting access to said resource, said apparatus comprising:

means for detecting a waiting time $W_I$ for each of said requestors ($R_I$), where $W_I$ is the time $R_I$ waits for access to said common resource after having requested access, and where $1 \leq I \leq N$;

means for determining service credits $C_I$ for each of said requestors, said credits $C_I$ being a function of said waiting time $W_I$, said credits $C_I$ being granted to each requestor $R_I$ only if $R_i$ is refused access to said resource after having requested access to said resource; and

means for providing a maximum time $T_M$ to a requestor $R_M$, where $1 \leq M \leq N$, with $T_M = q_b + C_M$, where $q_b$ is a constant, and where $T_M$ returns to $q_b$ after each access of $R_M$ to said resource, with $R_M$ having no service credits immediately after each access.

8. In a computer system, a method of providing access to a common resource for a plurality of requestors $R_1$, $R_2$, ..., $R_N$ requesting access to said resource, said method comprising:

detecting a waiting time ($W_I$) for each of said requestors $R_1$, where $W_I$ is the rime $R_I$ waits for access to said common resource after having requested access, where $1 \leq I \leq N$; and

providing a maximum access time $T_I$ for each requestor $R_I$, where $T_I$ is a function of $W_I$, where $T_I$ returns to an initial value $q_b$ after each access of $R_I$ to said resource, where $q_b$ is a constant, and where each requestor $R_I$ always maintains the same priority level throughout an entire session.

9. In a computer system, an apparatus for dynamically providing access time to a common resource for a plurality of requestors ($R_1$, $R_2$, ..., $R_N$) requesting access to said resource, said apparatus comprising:

means for detecting a waiting time $W_I$ for each of said requestors $R_I$, where $W_I$ is the time $R_I$ waits to access said resource after having requested access, where $1 \leq I \leq N$:

means for determining service credits $C_I$ for each of said requestors, said credits being a function of said waiting time $W_I$ and said credits $C_I$ being granted to each requestor $R_I$ only if $R_I$ is refused access to said resource after having requested access to said resource; and

means for providing a maximum access time $T_I$ for each requestor $R_I$ to use said resource, where $T_I = q_b + C_I$ where $q_b$ is a constant, and where $T_I$ returns to $q_b$ after each access of $R_I$ to said source, and where each requestor $R_I$ always maintains the same priority level throughout an entire session.

10. In a switching system, an apparatus for switching data between input ports $P_{I1}$, $P_{I2}$, ..., $P_{IN}$ and output ports $P_{O1}$, $P_{O2}$, ..., $P_{ON}$ of said apparatus comprising:

means for detecting a waiting time $W_I$ for each input port $P_{I1}$, with $W_I$ being the time $P_{I1}$ waits for a connection to said one of said output ports after having made a request for said connection; and

means for providing a connection to one of said output ports for a maximum connection time of $T_I$ for each input port $P_{I1}$ requesting a connection to said one output port, with $T_I$ being a function of $W_I$ and with $T_I$ returning to a constant value $q_b$ after said connection is disconnected.

# FIG. 1

FIG. 2

EP 0 537 509 A2

# FIG. 3

301 — R$_I$ PLACES A REQUEST

302 — RESET TIMER W$_I$ = 0

303 — WAIT TILL RESOURCE FREE

304 — COMPUTE CREDIT C$_I$ = cW$_I$

305 — SELECT LARGEST CREDIT C$_M$

306 — R$_M$ USES RESOURCE UP TO T$_M$ = q$_b$ + C$_M$

307 — R$_M$ NEEDS MORE SERVICE ?

YES

NO

308 — REQUEST COMPLETED

SERVICE COMPLETION BEFORE
END OF TIME GRANTED

BASIC QUOTA GRANTED

SERVICE REQUEST (RENEW)

LARGER QUOTA GRANTED

SERVICE REQUEST

SERVICE REFUSED

SERVICE REQUEST

SERVICE REFUSED

SERVICE REQUEST (RENEW)

BASIC QUOTA GRANTED

SERVICE REQUEST (RENEW)

BASIC QUOTA GRANTED

SERVICE REQUEST PLACED
(INITIAL)

TIME

408

$q_b$

407

$(q_b + c_I)$

406

405

$t_p$

$t_p$

$w_I = 2 t_p$

404

$q_b$

403

402

$q_b$

401

FIG. 4

FIG. 5